# FASCICULE DE BREVET EUROPEEN

(11) **EP 3 604 051 B1**
(45) Date de publication et mention de la délivrance du brevet: **05.05.2021**
(21) Numéro de dépôt: 19183877.0
(22) Date de dépôt: 02.07.2019
(51) Int. Cl.: B60S 1/34

(54) **ENSEMBLE DE CONNEXION D'UN BRAS D'ENTRAINEMENT D'UN BALAI D'ESSUYAGE A UN ARBRE MOTEUR D'UN VEHICULE**
EINHEIT ZUM VERBINDEN EINES ANTRIEBSARMS EINES SCHEIBENWISCHERS MIT EINER MOTORWELLE EINES FAHRZEUGS
ASSEMBLY FOR CONNECTING A DRIVE ARM OF A WIPER BLADE TO A MOTOR SHAFT OF A VEHICLE

(30) Priorité: 30.07.2018 FR 1857068
(43) Date de publication de la demande: 05.02.2020
(73) Titulaire: Valeo Systèmes d'Essuyage, 78322 Le Mesnil Saint Denis (FR)
(72) Inventeur: CHARBONNIER, Richard, 63500 ISSOIRE (FR); CHABANNES, Benjamin, 63500 ISSOIRE (FR)
(74) Mandataire: Valeo Visibility

(56) Documents cités:
- JP-A- 2017 065 447
- US-A1- 2002 152 575
- US-A1- 2007 136 975

## Description

L'invention se rapporte au domaine de l'essuyage des surfaces vitrées d'un véhicule, notamment automobile, et elle concerne plus particulièrement un ensemble de connexion permettant de relier un bras d'entrainement d'un balai d'essuyage et un arbre moteur du véhicule

Le document US 2002/0152575 A1 divulgue un ensemble de connexion selon le préambule de la revendication 1.

Les systèmes d'essuyage pour véhicules automobiles sont conçus pour retirer, par balayage, les liquides et salissures qui peuvent perturber la vision que le conducteur a de son environnement. Ces systèmes d'essuyage comprennent généralement au moins un bras d'entrainement entrainé en rotation par un arbre moteur du véhicule et qui effectue un mouvement de va-et-vient angulaire sur une surface vitrée du véhicule, et au moins un balai d'essuyage équipé d'une lame d'essuyage réalisée dans un matériau plastique souple et entrainé par le bras d'entrainement. En frottant contre cette surface vitrée, la lame d'essuyage racle l'eau et un certain nombre de salissures pour les évacuer en dehors du champ de vision du conducteur.

Quelle que soit la configuration du balai d'essuyage, le bras d'entrainement est relié à l'arbre moteur qui l'entraine en rotation par l'intermédiaire d'un dispositif de fixation. Ainsi, ce dispositif de fixation participe à former une zone de fixation du bras d'entrainement sur l'arbre moteur. Pour des raisons notamment esthétiques mais également pour éviter une dégradation trop rapide de cette zone de fixation, un capot est classiquement monté pivotant sur le dispositif de fixation. Ce capot peut prendre une position fermée dans laquelle il interdit l'accès à cette zone de fixation, protégeant ainsi cette dernière de l'usure, et une position ouverte dans laquelle il autorise l'accès à cette zone de fixation afin de permettre la mise en place de moyens de fixation qui permettent de fixer le dispositif de fixation sur l'arbre moteur.

Un tel capot comprend classiquement des moyens de verrouillage de sa position fermée, c'est-à-dire la position qu'il prend une fois que le dispositif de fixation est fixé sur l'arbre moteur. Un inconvénient des capots actuels réside dans le fait qu'ils sont dépourvus de moyens de verrouillage de la position ouverte, de sorte que le positionnement des moyens de fixation assurant la liaison entre le dispositif de fixation et l'arbre moteur est complexe et nécessite l'intervention d'au moins deux personnes, l'une d'elle devant maintenir le capot pendant que l'autre positionne les moyens de fixation.

La présente invention s'inscrit dans ce contexte et propose un moyen simple et peu coûteux permettant de maintenir le capot dans sa position ouverte afin qu'une personne seule soit capable de fixer le bras d'entraînement sur l'arbre moteur, aussi bien en première monte qu'en cas de changement de ce bras d'entrainement au cours de la vie du véhicule.

Un objet de la présente invention concerne ainsi un ensemble de connexion d'un bras d'entrainement d'un balai d'essuyage à un arbre moteur d'un véhicule, l'ensemble de connexion comprenant au moins un dispositif de fixation configuré pour lier en rotation le bras d'entrainement avec l'arbre moteur et au moins un capot monté pivotant sur le dispositif de fixation par l'intermédiaire d'une liaison pivot, le capot étant configuré pour prendre une position fermée dans laquelle il interdit un accès à une zone de fixation entre le dispositif de fixation et l'arbre moteur ou une position ouverte dans laquelle il autorise l'accès à la zone de fixation entre le dispositif de fixation et l'arbre moteur, cette liaison pivot comprenant au moins un alésage et au moins un toron reçu dans l'alésage. Selon l'invention, l'ensemble de connexion comprend au moins un dispositif de verrouillage de la position ouverte du capot, ce dispositif de verrouillage étant agencé d'une part sur le périmètre interne de l'alésage et d'autre part sur le périmètre externe du toron.

Autrement dit, au moins une portion du périmètre externe du toron est configurée pour coopérer avec au moins une portion du périmètre interne de l'alésage, cette coopération résultant en un verrouillage de la position ouverte du capot.

Selon l'invention, le toron comprend au moins deux pattes déformables reliées entre elles par un pont de matière. Autrement dit, le toron présente une forme en C vu depuis l'alésage qui reçoit ce toron.

Avantageusement, une extrémité d'au moins l'une des pattes du toron présente un chanfrein. Encore plus avantageusement, une extrémité de chacune des pattes du toron présente un chanfrein. Ces extrémités chanfreinées facilitent notamment l'insertion du toron dans l'alésage. Selon une configuration particulière de la présente invention, ces chanfreins sont ménagés dans un plan parallèle à un plan qui passe au milieu des pattes, c'est-à-dire un plan dans lequel chaque point est situé à égale distance de chacune des pattes.

Selon une caractéristique de la présente invention, une plaque est ménagée sur au moins une partie du périmètre externe du toron, une zone du périmètre externe du toron dépourvue de cette plaque délimitant au moins partiellement l'espace ménagé entre le périmètre externe du toron et le périmètre interne de l'alésage. Alternativement, la plaque pourra être agencée sur une partie du périmètre interne de l'alésage, une zone du périmètre interne de l'alésage dépourvue de cette plaque délimitant alors, au moins partiellement, l'espace ménagé entre le périmètre externe du toron et le périmètre interne de l'alésage. Selon une autre alternative, on pourra prévoir qu'une première plaque soit ménagée sur le périmètre interne toron et qu'une deuxième plaque soit ménagée sur le périmètre externe de l'alésage, une zone du périmètre interne de l'alésage dépourvue de cette plaque et une zone du périmètre externe du toron dépourvue de cette plaque délimitant alors toutes deux l'espace ménagé entre le périmètre interne de l'alésage et le périmètre externe du toron.

Selon un exemple particulier de la présente invention, l'au moins un toron est ménagé sur le capot et l'au moins un alésage est ménagé dans le dispositif de fixation. Avantageusement, le capot peut comprendre deux torons et le dispositif de fixation peut comprendre deux alésages, chaque alésage étant configuré pour recevoir l'un des torons. Il est entendu que chaque toron peut alors comprendre deux pattes déformables, une extrémité de chaque patte présentant un chanfrein. Selon l'invention, au moins deux saignées peuvent être ménagées entre un bord supérieur d'une paroi du dispositif de fixation dans laquelle est ménagé l'alésage et un bord de cet alésage qui délimite au moins partiellement une ouverture de cette alésage par laquelle le toron est inséré dans cet alésage. Avantageusement, ces saignées forment ainsi un guide à l'insertion du toron dans l'alésage.

Alternativement on pourra prévoir que le/les alésages soient ménagés dans le capot et que le/les torons soient ménagé sur le dispositif de fixation.

Selon un premier exemple de réalisation de la présente invention, le dispositif de verrouillage de la position ouverte du capot comprend au moins une première butée ménagée sur le périmètre interne de l'alésage et au moins une deuxième butée ménagée sur le périmètre externe du toron. On comprend alors qu'une coopération entre cette première butée et cette deuxième butée permet de verrouiller la position ouverte du capot. On entend par « coopération » le fait que l'une de ces butées franchisse l'autre, la première butée et la deuxième butée étant alors maintenue en appui l'une contre l'autre. Autrement dit, on comprend que la première butée forme butée à la deuxième butée, et vice versa.

Selon une caractéristique de ce premier exemple de réalisation, la deuxième butée est ménagée à une extrémité d'au moins l'une des pattes du toron. Avantageusement, cette deuxième butée est ménagée dans la zone du périmètre externe du toron dépourvue de la plaque.

Selon le premier exemple de réalisation, la première butée peut par exemple être formée par un premier bossage et la deuxième butée peut quant à elle être formée par un deuxième bossage. On entend ici par « bossage » une déformation de matière. En d'autres termes, la première butée est alors formée par une déformation du périmètre interne de l'alésage et la deuxième butée est quant à elle formée par une déformation du périmètre externe du toron. Ainsi, le premier bossage et le périmètre interne de l'alésage forment un ensemble monobloc, c'est-à-dire un ensemble qui ne peut être séparé sans entrainer une détérioration du premier bossage ou du périmètre interne de l'alésage, et le deuxième bossage forme, avec le périmètre externe du toron, un autre ensemble monobloc.

Selon l'invention, l'alésage présente une forme sensiblement cylindrique. Selon une caractéristique du premier exemple de réalisation de la présente invention, le premier bossage s'étend parallèlement à un axe de révolution de l'alésage, depuis un bord qui délimite l'ouverture de l'alésage par laquelle le toron est inséré dans l'alésage. Selon une configuration particulière de ce premier exemple de réalisation, le premier bossage s'étend ainsi sur toute une dimension de l'alésage.

Selon l'invention, le toron émerge d'un socle duquel il s'étend majoritairement selon un axe d'extension principal. Selon le premier exemple de réalisation de la présente invention, le deuxième bossage s'étend depuis ce socle, parallèlement à l'axe d'extension principal du toron. Par exemple, ce socle peut être issu de matière avec le capot, c'est-à-dire que le capot et le socle forment un unique ensemble qui ne peut être séparé sans entrainer la détérioration du capot ou du socle. Avantageusement, le toron est également issu de matière avec le socle, le socle, le toron et le capot formant alors un unique ensemble qui ne peut être séparé sans entrainer la détérioration de l'un de ces trois éléments.

Selon un deuxième exemple de réalisation de la présente invention, le dispositif de verrouillage comprend au moins un méplat ménagé sur le périmètre interne de l'alésage, et au moins une patte du toron, le méplat étant configuré pour venir en appui contre cette au moins une patte. Avantageusement, l'appui du méplat sur au moins l'une des pattes du toron combiné à la déformabilité de cette patte génèrent un rapprochement des deux pattes du toron. Autrement dit, une distance mesurée entre deux points des pattes est inférieure quand le méplat est en appui contre la patte que lorsqu'il ne l'est pas. Plus précisément, la patte du toron est élastiquement déformable de sorte qu'une fois rapprochée de l'autre patte par l'appui qu'exerce le méplat, cette patte tend à reprendre sa position initiale, assurant ainsi le verrouillage de la position ouverte du capot. Autrement dit, le verrouillage de la position ouverte du capot selon ce deuxième exemple de réalisation est assuré par un frottement entre l'une des pattes du toron et le méplat ménagé sur le périmètre interne de l'alésage.

Selon une caractéristique du deuxième exemple de réalisation de la présente invention, lorsque le capot est dans la position fermée, au moins une droite coupant le méplat passe entre les pattes du toron. Avantageusement, cette droite passe au milieu de ces deux pattes, c'est-à-dire qu'un point quelconque de cette droite est équidistant de chacune de ces pattes.

La présente invention concerne également un système d'essuyage comprenant au moins un balai d'essuyage destiné à venir au contact d'une surface vitrée d'un véhicule automobile, au moins un bras d'entrainement configuré pour entrainer en rotation le balai d'essuyage, le bras d'entrainement étant relié à un arbre moteur du véhicule par un ensemble de connexion selon l'invention. Selon une configuration particulière de la présente invention, le balai d'essuyage est destiné à venir au contact d'une lunette arrière du véhicule.

D'autres détails, caractéristiques et avantages ressortiront plus clairement à la lecture de la description détaillée donnée ci-après en relation avec les différents exemples de réalisation illustrés sur les figures suivantes :
- la figure 1 est une représentation schématique d'un système d'essuyage comprenant un ensemble de connexion selon la présente invention ;
- la figure 2 est une vue en perspective, vu de dessus, de l'ensemble de connexion selon la présente invention comprenant un dispositif de fixation et un capot, le capot étant illustré dans une position ouverte ;
- la figure 3 est une représentation en perspective, vu de dessous, de l'ensemble de connexion selon la présente invention dans lequel le capot est illustré dans une position fermée ;
- la figure 4 illustre une coupe transversale du capot de l'ensemble de connexion selon un premier exemple de réalisation de la présente invention ;
- la figure 5 est une représentation partielle du dispositif de fixation de l'ensemble de connexion selon le premier exemple de réalisation de la présente invention ;
- la figure 6 est une vue en perspective d'une liaison pivot ménagée entre le dispositif de fixation et le capot illustrés sur les figures 4 et 5, lorsque le capot est dans la position ouverte ;
- la figure 7 est une représentation partielle du dispositif de fixation de l'ensemble de connexion selon un deuxième exemple de réalisation de la présente invention ;
- les figures 8 et 9 sont des vues en coupe longitudinale d'une liaison pivot ménagée entre le dispositif de fixation et le capot selon le deuxième exemple de réalisation de la présente invention, respectivement lorsque le capot est dans la position fermée et lorsque le capot est dans la position ouverte.

Dans la suite de la description, les dénominations longitudinales ou transversales se réfèrent à l'orientation d'un dispositif de fixation d'un ensemble de connexion selon l'invention. La direction longitudinale correspond à une direction d'extension principale du dispositif de fixation, cette direction longitudinale étant parallèle à un axe longitudinal L d'un trièdre L, V, T illustré sur les figures, une direction transversale correspond à une direction parallèle à un axe transversal T de ce trièdre, cet axe transversal T étant perpendiculaire à l'axe longitudinal L. Une direction verticale correspond quant à elle à une direction parallèle à un axe vertical V du trièdre, l'axe vertical V étant perpendiculaire à l'axe longitudinal L et à l'axe transversal T.

Les dénominations « supérieur », « inférieur », « dessus » et « dessous » se réfèrent quant à elle à une orientation de l'ensemble de connexion lorsque celui-ci est intégré à un système d'essuyage sur un véhicule, les termes « supérieur » et « dessus » faisant référence à des positions le long de l'axe vertical V du trièdre les plus éloignées de la surface vitrée du véhicule et les termes « inférieur » et « dessous » faisant référence à des positions le long de l'axe vertical V les plus proches de la surface vitrée de ce véhicule.

Les coupes transversales mentionnées ci-après sont réalisées selon des plans de coupe dans lesquels s'inscrivent l'axe transversal T et l'axe vertical V du trièdre illustré sur les figures. Les coupes longitudinales sont quant à elles réalisées selon un plan dans lequel s'inscrivent l'axe longitudinal L et l'axe vertical V du trièdre illustré sur les figures.

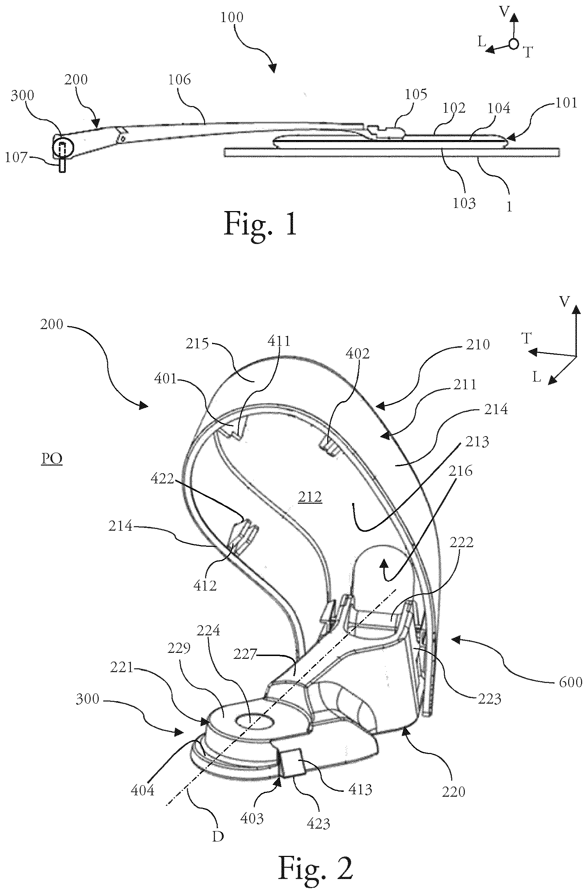

En référence à la figure 1, un véhicule automobile est couramment équipé d'un système d'essuyage 100 pour évacuer une eau et/ou des salissures présentes sur une surface vitrée 1, notamment une lunette arrière ou un pare-brise de véhicule automobile. Le système d'essuyage 100 comprend un balai d'essuyage 101 qui comprend au moins un déflecteur d'air 102 et une lame racleuse 103 reliés l'un à l'autre par un élément de structure 104 du balai d'essuyage 101, ce dernier étant alors dépourvu de palonniers. Un tel élément de structure 104 peut par exemple être formé par un unique organe de flexion, ou par une pluralité d'organes de flexion ou encore par un support dans lequel sont enfilés un ou plusieurs organes de flexion.

Le déflecteur d'air 102 est prévu pour transformer une pression appliquée par un flux d'air circulant le long de la surface vitrée 1 en une force d'appui du balai d'essuyage 101 contre la surface vitrée 1 du véhicule automobile. La lame racleuse 103 est la pièce du balai d'essuyage 101 en contact direct avec la surface vitrée 1 et elle est configurée pour évacuer l'eau et/ou les salissures présentes sur cette dernière. Selon l'exemple illustré, le déflecteur d'air 102, la lame racleuse 103 et l'élément de structure 104 forment un ensemble semi-rigide porté par un dispositif de fixation 105, interposé entre un bras d'entraînement 106 et le balai d'essuyage 101. Alternativement, on pourra prévoir que le balai d'essuyage soit directement relié au bras d'entrainement.

Le bras d'entraînement 106 est apte à effectuer un mouvement de va-et-vient angulaire le long de la surface vitrée 1, entrainant avec lui le balai d'essuyage 101. Selon l'invention, le bras d'entrainement 106 est lié en rotation à un arbre moteur 107 du véhicule par un ensemble de connexion 200 selon la présente invention. Tel que cela sera plus amplement détaillé ci-après, cet ensemble de connexion 200 comprend au moins un dispositif de fixation qui assure la liaison mécanique entre le bras d'entrainement 106 et l'arbre moteur 107 et un capot monté en rotation sur le dispositif de fixation, le capot étant agencé au-dessus du dispositif de fixation lorsque l'ensemble de connexion est intégré au système d'essuyage. Le capot permet, en plus d'une fonction esthétique, de protéger une zone de fixation 300 du dispositif de fixation sur l'arbre moteur 107. Selon l'invention, une liaison pivot est ainsi ménagée entre le dispositif de fixation et le capot de l'ensemble de connexion 200. Tel que cela sera plus amplement détaillé ci-après, cette liaison pivot comprend au moins un toron reçu dans un alésage.

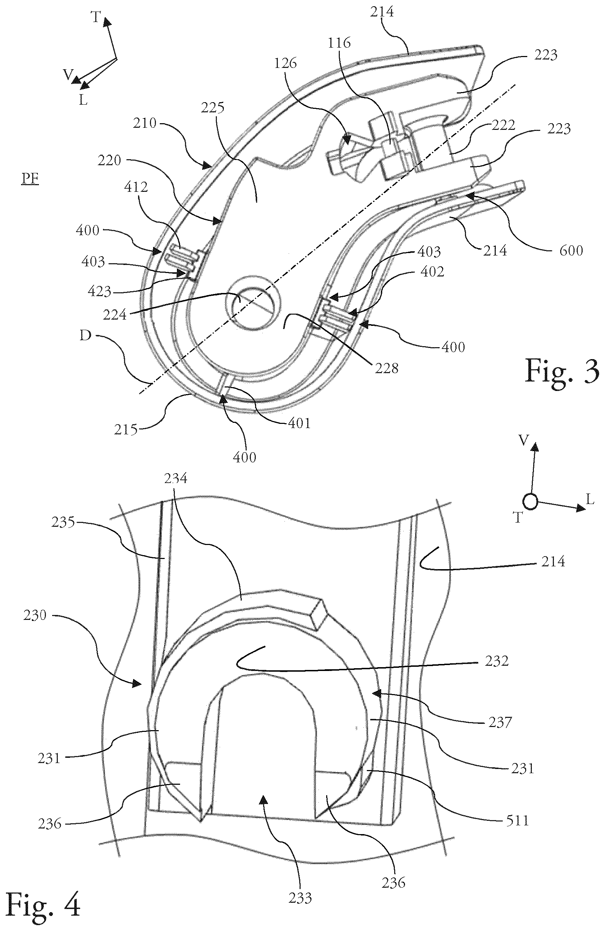

Le capot 210 est ainsi mobile par rapport au dispositif de fixation 220 et il peut ainsi prendre une position ouverte PO ou une position fermée PF respectivement illustrées sur les figures 2 et 3. La position ouverte PO du capot 210 correspond à une position dans laquelle la zone de fixation 300 du dispositif de fixation 220 sur l'arbre moteur 107 est accessible et la position fermée PF de ce capot 210 correspond quant à elle à une position dans laquelle le capot 210 recouvre la zone de fixation 300 du dispositif de fixation 220 sur l'arbre moteur 107.

Il est entendu que le système d'essuyage 100 qui vient d'être décrit n'est qu'un exemple et que l'ensemble de connexion 200 selon la présente invention peut être utilisé sur tout type de système d'essuyage, par exemple un système d'essuyage dans lequel le bras d'entrainement est relié au balai d'essuyage par des palonniers, c'est-à-dire un système d'essuyage dépourvu de l'élément de structure 104.

En référence à ces figures 2 et 3, nous allons maintenant décrire plus en détails l'ensemble de connexion 200 selon la présente invention, la figure 2 étant une vue de dessus, en perspective, de l'ensemble de connexion 200 lorsque le capot 210 dans sa position ouverte PO et la figure 3 est une vue de dessous, en perspective, de l'ensemble de connexion 200 lorsque le capot 210 dans sa position fermée PF.

Le dispositif de fixation 220 permet de créer une liaison mécanique entre le bras d'entrainement et l'arbre moteur et comprend à cet effet au moins un palier 221 configuré pour recevoir l'arbre moteur et au moins un arbre 222 sur lequel le bras d'entrainement peut être fixé. Tel qu'illustré, le dispositif de fixation 220 s'étend majoritairement selon une direction d'extension principale D parallèle à l'axe longitudinal L du trièdre, le palier 221 et l'arbre 222 étant opposés l'un à l'autre le long de cette direction d'extension principale D.

Tel qu'illustré sur les figures 2 et 3, l'arbre 222 s'étend entre deux parois latérales 223 du dispositif de fixation 220, et selon une direction perpendiculaire, ou sensiblement perpendiculaire à la direction d'extension principale D de ce dispositif de fixation 220, c'est-à-dire parallèlement à l'axe transversal T du trièdre illustré. Ces parois latérales 223 sont en outre porteuses d'au moins une partie de la liaison pivot 600 ménagée entre le dispositif de fixation 220 et le capot 210. Les deux parois latérales 223 du dispositif de fixation 220 sont reliées entre elles, d'une part par une paroi inférieure 225 et d'autre part par une paroi supérieure 227, la paroi inférieure 225 étant tournée vers la surface vitrée lorsque l'ensemble de connexion 200 est intégré au véhicule et la paroi supérieure 227 étant tournée vers le capot 210. On remarque sur les figures 2 et 3 qu'une face inférieure 228 du palier 221 s'étend dans un même plan longitudinal et transversal que la paroi inférieure 225 du dispositif de fixation 220. En revanche, un plan dans lequel s'inscrit une face supérieure 229 du palier 221 et un plan dans lequel s'inscrit majoritairement la paroi supérieure 227 du dispositif de fixation 220 sont distincts, le plan dans lequel s'inscrit la face supérieure 229 du palier 221 étant positionné sous le plan dans lequel s'inscrit majoritairement la paroi supérieure 227 du dispositif de fixation 220.

Tel que représenté, un orifice 224 est ménagé dans le palier 221 et on comprend que c'est dans cet orifice 224 qu'est destiné à être reçu l'arbre moteur du véhicule. Lorsque l'on souhaite fixer l'ensemble de connexion 200 selon l'invention sur l'arbre moteur, on comprend que cet arbre moteur est ainsi inséré dans l'orifice 224 ménagé dans le palier 221 du dispositif de connexion 220, par dessous, c'est-à-dire que l'orifice 224 débouche sur la face inférieure 228 du palier 221 et que c'est par cette face inférieure 228 que l'arbre moteur est inséré dans le palier 221. Une fois l'arbre moteur inséré dans l'orifice, au moins un moyen de fixation est ajouté, afin de maintenir l'arbre moteur en position dans cet orifice 224. Autrement dit, le palier 221 du dispositif de fixation 220, et plus particulièrement l'orifice 224 ménagé dans ce palier 221, participe à former la zone de fixation 300 du dispositif de fixation 220 sur l'arbre moteur. Selon l'exemple illustré ici, le palier 221 est circulaire mais il pourrait prendre toute autre forme sans sortir du contexte de la présente invention.

Tel que représenté sur la figure 3, le dispositif de connexion 220 comprend en outre une tige 116 qui s'étend sensiblement parallèlement à l'arbre 222 entre les deux parois latérales 223 du dispositif de fixation 220. Cette tige 116 est destinée à recevoir un crochet d'un dispositif de rappel élastique configuré pour plaquer le balai d'essuyage sur la surface vitrée à nettoyer. Autrement dit, dans l'exemple illustré ici, ce dispositif de rappel élastique exerce une force d'appui sur le balai d'essuyage par l'intermédiaire de l'élément de structure qui permet de répartir cette force sur toute une longueur de ce balai d'essuyage. On remarque également qu'un ajour 126 est ménagé dans la paroi inférieure 225 du dispositif de fixation 220, autour de cette tige 116. On comprend que cet ajour 126 est configuré pour permettre l'assemblage du crochet du dispositif de rappel élastique sur la tige 116.

Le capot 210 s'étend quant à lui obliquement par rapport à la direction principale d'extension D du dispositif de fixation 220 lorsqu'il est dans sa position ouverte PO et selon une direction sensiblement parallèle à la direction d'extension principale D du dispositif de fixation 220 lorsqu'il est dans sa position fermée PF. Ce capot 210 comprend une paroi périphérique 211 qui délimite un volume interne 212 de ce capot 210. Vue de dessous, cette paroi périphérique 211 présente une forme en U partiellement fermée par une paroi de fond 213. Autrement dit, le capot 210 comprend au moins deux branches 214 reliées entre elles par une base 215 d'une part et par la paroi de fond 213 d'autre part. Tel que représenté, la paroi de fond 213 présente un évidement 216 qui permet de laisser accessible l'arbre 222 du dispositif de fixation 220 destiné à recevoir le bras d'entrainement. On comprend donc que le bras d'entrainement peut être changé à tout moment sans qu'aucune opération ne soit nécessaire sur le capot 210. Les branches 214 du capot 210 sont quant à elles agencées de part et d'autre des parois latérales 223 du dispositif de fixation 220 et portent au moins une partie de la liaison pivot 600 ménagée entre le capot 210 et le dispositif de fixation 220. Autrement dit, l'articulation du capot 210 par rapport au dispositif de fixation 220 se fait dans une zone où se chevauchent les branches 214 du capot 210 et les parois latérales 223 du dispositif de fixation 220.

Tel qu'évoqué ci-dessus, le capot 210 peut prendre la position ouverte PO, illustrée sur la figure 2, dans laquelle la zone de fixation 300 du dispositif de fixation 220 sur l'arbre moteur est accessible et une position fermée PF, illustrée sur la figure 3, dans laquelle le capot 210 recouvre totalement au moins cette zone de fixation 300 de sorte notamment à protéger cette zone de fixation 300 et à éviter que le dispositif de fixation 220 ne se désolidarise de l'arbre moteur. Avantageusement, le volume interne 212 du capot 210 est ainsi configuré pour permettre un rabattement du capot 210 sur le dispositif de fixation 220. Selon un exemple illustré ici, ce volume interne 212 est apte à contenir l'intégralité du dispositif de fixation 220.

L'ensemble de connexion 200 selon la présente invention comprend en outre au moins un dispositif de verrouillage de la position ouverte PO du capot 210. Selon l'invention, le verrouillage de la position ouverte PO du capot 210 grâce au dispositif de verrouillage rend notamment la zone de fixation 300 accessible sans que le capot 210 n'est à être maintenu par un opérateur, facilitant ainsi la mise en place du/des moyen(s) de fixation permettant de fixer le dispositif de fixation 220 sur l'arbre moteur du véhicule. Tel que cela sera décrit plus amplement ci-après en référence aux figures 4 à 9, le dispositif de verrouillage est ménagé sur la liaison pivot 600 ménagée entre le dispositif de fixation 220 et le capot 210.

L'ensemble de connexion 200 selon l'invention comprend également un moyen de verrouillage 400 de la position fermée PF du capot 210 qui permet quant à lui de protéger la zone de fixation 300, et ce quelle que soit la vitesse de déplacement du véhicule sur lequel est monté un tel ensemble de connexion 200. Selon l'exemple illustré ici, le moyen de verrouillage 400 comprend une première nervure 401 et deux deuxièmes nervures 402 ménagées sur le capot 210, et au moins deux ergots 403 configurés pour former butée au deux deuxième nervures 402 ainsi qu'une surface d'appui 404 destinée à recevoir la première nervure 401.

Tel qu'illustré, la première nervure 401 et les deux deuxièmes nervures 402 s'étendent toutes les trois dans le volume interne 212 du capot 210. La première nervure 401 comprend une encoche 411 destinée à venir en butée contre la surface d'appui 404 évoquée ci-dessus. Cette surface d'appui 404 s'étend sur un pourtour du palier 221, de sorte que la première nervure 401 peut être ménagée en n'importe quel point de la base 215 de la forme de U que prend le capot 210. Avantageusement, la coopération de l'encoche 411 ménagée sur la première nervure 401 avec la surface d'appui 404 permet de limiter un déplacement du capot 210 du haut vers le bas, c'est-à-dire un déplacement qui permet de rabattre ce capot 210 sur le dispositif de fixation 220. Selon l'exemple illustré ici, cette surface d'appui 404 est plane mais elle pourrait également être irrégulière, et par exemple présenter un cran de réception de l'encoche ménagée sur la première nervure sans sortir du contexte de la présente invention.

Les deux deuxième nervures 402 sont quant à elles identiques et sont ménagées, respectivement, sur l'une des branches 214 de la forme de U que prend le capot 210. Selon l'exemple illustré ici, le moyen de verrouillage 400 comprend plus particulièrement quatre deuxièmes nervures 402 réparties deux à deux sur chacune des branches 214 du capot 210. Toutes ces deuxièmes nervures 402 sont identiques et la description qui va être donnée pour l'une d'entre elle est ainsi directement transposable aux trois autres. De façon analogue, les références portées sur l'une de ces deuxièmes nervures 402 sont également directement transposables aux trois autres.

Ces deuxièmes nervures 402 présentent au moins un bord inférieur 412 chanfreiné, c'est-à-dire qu'un bord de chacune de ces nervures 402 tourné vers le dispositif de fixation 220 lorsque le capot 210 est dans sa position ouverte PO présente un chanfrein. Chaque nervure 402 présente en outre au moins un bord supérieur 422 tourné vers la paroi de fond 213 du capot 210. Au moins deux ergots 403 sont par ailleurs ménagés sur le dispositif de fixation 220, par exemple à proximité du palier 221. On entend ici par « à proximité du palier 221 » le fait que chaque ergot 403 est ménagé plus près du palier 221 que de l'arbre 222. Chacun de ces ergots 403 comprend au moins une paroi inclinée 413 et au moins une paroi horizontale 423 qui s'étend majoritairement dans un plan dans lequel s'inscrivent l'axe longitudinal L et l'axe transversal T du trièdre illustré. Plus particulièrement, cette paroi horizontale 423 s'étend dans le même plan longitudinal et transversal que la face inférieure 228 du palier 221 et que la paroi inférieure 225 du dispositif de fixation 220. Ainsi, lorsque le capot 210 est rabattu depuis sa position ouverte PO vers sa position fermée PF, les chanfreins des bords inférieurs 412 des deuxième nervures 402 glissent contre la paroi inclinée 413 de l'un des ergots 403, puis le bord supérieur 422 de la deuxième nervure 402 concernée vient en butée contre la paroi horizontale 423 de l'ergot 403 en question. Selon l'exemple illustré, deux deuxièmes nervures 402 viennent en butée contre chaque ergot 403. On comprend que la coopération des bords supérieurs 422 des deuxièmes nervures 402 avec la paroi horizontale 423 des ergots 403 permet d'empêcher que le capot 210 ne se relève intempestivement, c'est-à-dire ne passe de sa position fermée PF à sa position ouverte PO. Ainsi, les première et deuxièmes nervures 401, 402, les ergots 403 et la surface d'appui 404 forment, conjointement, le moyen de verrouillage 400 de la position fermée PF du capot 210.

Tel que précédemment évoqué, la liaison pivot 600 qui comprend au moins un toron reçu dans au moins un alésage et qui est ménagée entre le dispositif de fixation 220 et le capot 210 est en outre porteuse du dispositif de verrouillage de la position ouverte PO du capot 210. Autrement dit, l'au moins un toron et l'au moins un alésage sont répartis entre le dispositif de fixation 220 et le capot 210 et ils sont porteurs, respectivement, d'au moins un élément participant au dispositif de verrouillage de la position ouverte PO du capot 210.

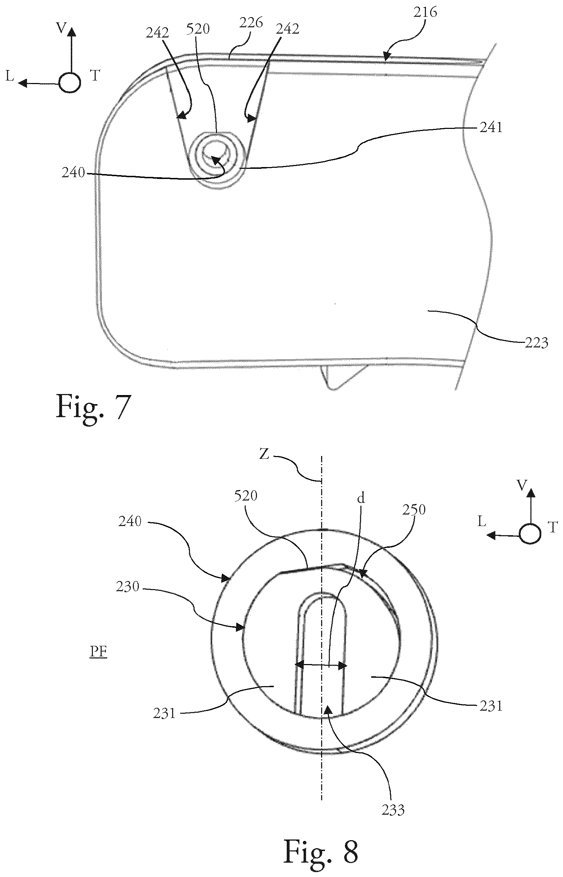

Les figures 4 à 6 illustrent ainsi un premier exemple de réalisation de cette liaison pivot 600 et donc du dispositif de verrouillage de la position ouverte PO du capot 210 et les figures 7 à 9 illustrent quant à elles un deuxième exemple de réalisation de cette liaison pivot 600, et donc du dispositif de verrouillage de la position ouverte PO du capot. Nous allons dans un premier temps décrire les caractéristiques communes à ces deux exemples de réalisation avant de décrire les caractéristiques particulières de chacun d'entre eux.

Selon les exemples illustrés ici, la liaison pivot 600 comprend au moins deux torons 230 ménagés sur le capot 210, l'un de ces torons 230 étant par exemple illustrés sur la figure 4. Selon les exemples illustrés ici, les deux torons 230 sont identiques de sorte que la description donnée ci-après à propose de l'un d'entre eux est directement transposable à l'autre.

Tel que partiellement représenté, le toron 230 émerge d'un socle 235 issu de matière avec l'une des branches 214 du capot 210 et s'étend selon un axe d'extension principal parallèle à l'axe transversal T du trièdre. En d'autres termes, les torons 230 s'étendent depuis les branches 214 du capot 210, l'un vers l'autre, et dans le volume interne de ce capot 210. Ces torons 230 présentent en outre une forme en C vu depuis le volume interne du capot 210, et comprennent ainsi au moins deux pattes 231 déformables reliées entre elles par un pont de matière 232. Plus précisément, ces pattes 231 sont élastiquement déformables, c'est-à-dire qu'elles sont configurées pour reprendre leur position initiale après avoir été déformées. Ainsi, chaque toron 230 présente une fente 233 qui, d'une part permet de former les pattes 231 et qui, d'autre part, confère une élasticité à ces pattes 231. Tel que représenté, les extrémités 236 des pattes 231 présentent, chacune, un chanfrein, c'est-à-dire que ces extrémités 236 présentent une forme oblique vue de côté. Cette forme particulière permet notamment de faciliter l'insertion des torons dans les alésages 240 de la liaison pivot.

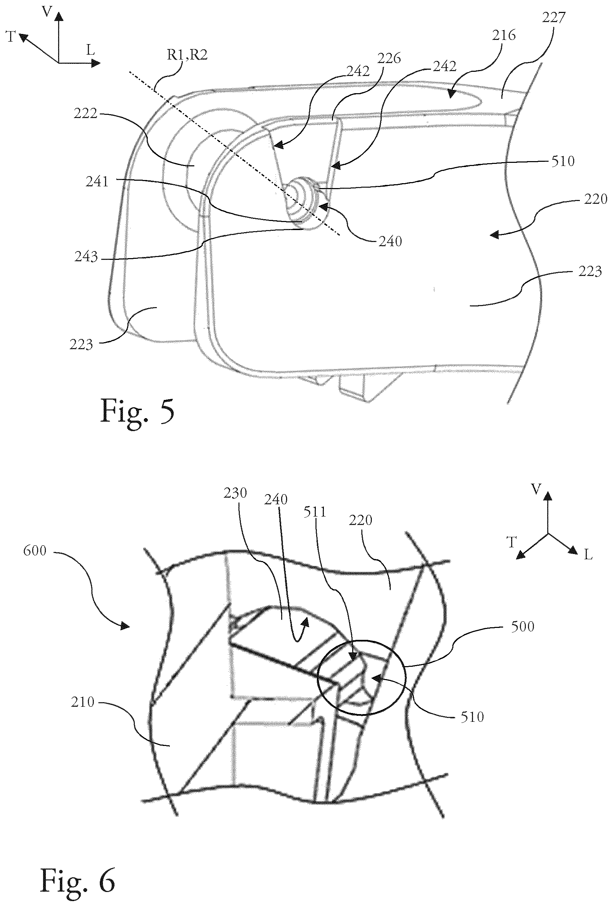

Selon les exemples illustrés ici, ces alésages 240 sont ménagés dans le dispositif de fixation 220, et plus particulièrement un alésage 240 est ménagé dans chaque paroi latérale 223 de ce dispositif de fixation 220, en regard de l'arbre 222 destiné à recevoir le bras d'entrainement. Ces alésages 240 sont par exemple illustrés aux figures 5 et 7. Par exemple, les deux alésages 240 du dispositif de fixation 220 peuvent communiquer, au moins partiellement, par l'intermédiaire de cet arbre 222 qui est alors creux. Tel qu'illustré, ces alésages 240 présentent une forme sensiblement cylindrique, un axe de révolution R1 de l'un des alésages 240 étant, selon les exemples illustrés ici, confondu avec un axe de révolution R2 de l'autre alésage, ces axes de révolution R1, R2 étant parallèles à l'axe transversal T du trièdre. En outre, chaque paroi latérale 223 qui porte l'un des alésages 240 présente au moins deux saignées 242 ménagées obliquement depuis un bord supérieur 226 de la paroi latérale 223 concernée, c'est-à-dire un bord de cette paroi latérale 223 tourné vers le capot 210 lorsque celui-ci est monté sur le dispositif de fixation 220, jusqu'à une ouverture 243 de l'alésage 240 par laquelle le toron concerné peut être inséré dans ce dernier. On comprend que ces saignées 242 facilitent l'introduction du toron 230 dans l'alésage 240 concerné, notamment en formant un guide à l'introduction de ce toron 230 dans l'alésage 240.

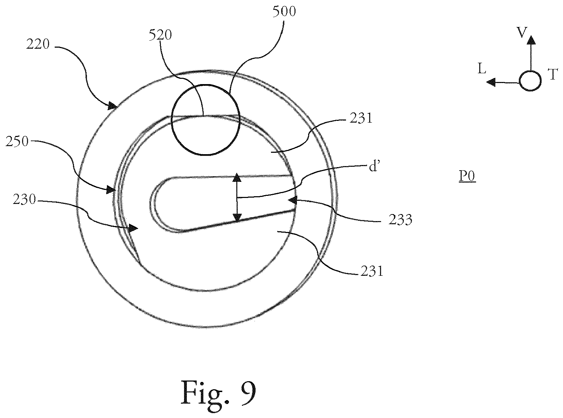

On remarque également que, selon l'un quelconque des exemples de réalisation illustrés ici, un périmètre interne des alésages 240 est constant tandis qu'un périmètre externe des torons 230 ne l'est pas. Plus particulièrement, chaque toron 230 comprend au moins une plaque 234 agencée sur une portion de son périmètre externe, cette plaque 234 étant par exemple visible sur la figure 4. On entend par « plaque » un élément d'une épaisseur prédéfinie qui épouse la forme du toron 230 sur lequel elle est positionnée. Ces plaques 234 sont configurées pour venir en appui contre un épaulement 241 ménagé dans chaque alésage 240, cet épaulement 241 formant ainsi un guide de la plaque 234 concernée. Tel que mentionné, ces plaques 234 ne s'étendent que sur une portion du périmètre externe de chaque toron 230 de sorte que lorsqu'un toron 230 est inséré dans un alésage 240, un espace 250 est délimité entre le périmètre externe du toron 230 et le périmètre interne de l'alésage 240, et plus précisément entre une zone 237 du périmètre externe du toron 230 dépourvue de plaque 234 et le périmètre interne de l'alésage qui fait face à cette zone 237 du périmètre externe du toron 230 dépourvue de plaque 234. Autrement dit, la zone 237 du toron 230 dépourvue de plaque 234 délimite, au moins partiellement l'espace 250. Cet espace 250 est par exemple visible sur les figures 8 et 9. Bien que cet espace 250 ne soit représenté que sur ces figures 8 et 9, cet espace 250 est délimité quel que soit l'exemple de réalisation de la présente invention. Selon l'exemple illustré sur les figures 4 à 6, cet espace est délimité, en partie, par la plaque 234 mais il est entendu qu'il ne s'agit que d'un exemple et que tout autre moyen serait envisageable sans sortir du contexte de l'invention. Par exemple, tel qu'illustré sur les figure 8 et 9, une cavité est formée sur le périmètre externe du toron et/ou sur le périmètre interne de l'alésage, et un fond de cette cavité délimite alors cet espace. Tel que cela sera plus amplement détaillé ci-dessous, cet espace 250 permet au toron 230 de tourner dans l'alésage 240 qui le reçoit jusqu'à ce que la position ouverte PO du capot 210 soit verrouillée.

En référence aux figures 4 à 6, nous allons maintenant décrire en détails le premier exemple de réalisation de la présente invention. Selon ce premier exemple de réalisation, le dispositif de verrouillage 500 de la position ouverte PO du capot 210 comprend au moins une première butée 510 ménagée sur le périmètre interne d'au moins l'un des alésages 240, avantageusement sur le périmètre interne des deux alésages 240, et une deuxième butée 511 ménagée sur le périmètre externe d'au moins l'un des torons 230, avantageusement sur le périmètre externe des deux torons 230.

Tel que représenté sur les figures 4 et 5, la première butée 510 est formée par un premier bossage ménagé sur le périmètre interne de l'alésage 240 et la deuxième butée 511 est quant à elle formée par un deuxième bossage ménagé sur le périmètre externe du toron 230. On entend ici par « bossage » une déformation de matière, c'est-à-dire une déformation du périmètre interne de l'alésage ou une déformation du périmètre externe du toron. Ainsi, le premier bossage est issu de matière avec le périmètre interne de l'alésage 240 et le deuxième bossage est quant à lui issu de matière avec le périmètre externe du toron 230, c'est-à-dire que le premier bossage et le périmètre interne de l'alésage forment un ensemble unique inséparable et que le deuxième bossage et le périmètre externe du toron 230 forment un autre ensemble unique inséparable.

Tel qu'illustré, le premier bossage ménagé sur le périmètre interne de l'alésage s'étend depuis un bord qui délimite l'ouverture 243 de l'alésage 240 et jusqu'à l'épaulement 241 ménagé sur le périmètre interne de cet alésage 240, ce premier bossage s'étendant parallèlement l'axe de révolution R1, R2 de l'alésage 240 concerné. Le deuxième bossage est quant à lui formé sur l'une des pattes 231 du toron 230 concerné, et plus précisément, à proximité de l'extrémité 236 de cette patte 231. On entend ici par « à proximité » le fait que le deuxième bossage est ménagé plus près de cette extrémité 236 que du pont de matière 232 qui relie les pattes 231 de ce toron 230.

La figure 6 est une vue en perspective de la liaison pivot 600 selon le premier exemple de réalisation de la présente invention. Ainsi cette figure 6 illustre une coopération entre la première butée 510 et la deuxième butée 511 du dispositif de verrouillage 500 de la position ouverte PO du capot 210. On entend par « coopération » le fait que la première butée 510 franchisse la deuxième butée 511, grâce à une rotation du toron 230 dans l'alésage 240, puis que cette première butée 510 vienne en appui contre la deuxième butée 511. En d'autres termes, on comprend que la première butée 511 forme butée à la deuxième butée 511 et vice versa, assurant ainsi le verrouillage de la position ouverte PO du capot 210. De plus, tel que précédemment évoqué, les pattes 231 des torons 230 sur lesquelles est ménagée la deuxième butée 511 sont élastiquement déformables. Ainsi, lorsque la première butée 510 et la deuxième butée 511 coopèrent, ces pattes 231 s'éloignent l'une de l'autre et tendent ensuite à se rapprocher, c'est-à-dire à reprendre leur position initiale, renforçant ainsi le verrouillage de la position ouverte PO du capot 210.

Nous allons maintenant décrire plus en détails le deuxième exemple de réalisation de la présente invention illustré sur les figures 7 à 9, les figures 8 et 9 illustrant respectivement la liaison pivot 600 lorsque le capot 210 est dans une position fermée PF et la liaison pivot 600 lorsque le capot 210 est dans une position ouverte PO.

Selon ce deuxième exemple de réalisation de la présente invention, le dispositif de verrouillage 500 comprend un méplat 520 formé sur le périmètre interne d'au moins l'un des alésages 240, avantageusement sur les périmètres internes des deux alésages 240, et l'une des pattes 231 d'au moins l'un des torons 230, avantageusement l'une des pattes 231 de chacun des torons 230. Les torons 230 de la liaison pivot 600 selon le deuxième exemple de réalisation - non illustrés ici - diffèrent des torons de liaison pivot 600 selon le premier exemple de réalisation notamment en ce qu'ils sont dépourvus de la deuxième butée 511 ainsi que de la plaque 234. Toutefois, tel que précédemment évoqué, on remarque que le périmètre interne de l'alésage 240 est inférieur au périmètre externe du toron 230, de sorte que l'espace 250 facilitant la rotation du toron 230 dans l'alésage 240 soit tout de même généré.

Tel qu'illustré sur la figure 7, le méplat 520 est formé sur une portion supérieure du périmètre interne de l'alésage 240, c'est-à-dire une portion de ce périmètre interne tournée vers le bord supérieur 226 de la paroi latérale 223 dans laquelle est ménagé cet alésage 240. On remarque également sur la figure 8 que, lorsque le capot 210 est en position fermée PF, une droite Z qui coupe le méplat 520 passe également entre les pattes 231 du toron 230 concerné, c'est-à-dire que cette droite Z passe par la fente 233 su toron 230. Lorsque le capot 210 est déplacé de sa position fermée PF à sa position ouverte PO, le toron 230 tourne jusqu'à ce qu'un appui du méplat 520 sur l'une des pattes 231 de ce toron 230 soit suffisamment important pour rapprocher les deux pattes 231 de ce toron 230 l'une de l'autre et ainsi verrouiller, par frottement, la position ouverte PO du capot 210. Cette position ouverte PO du capot 210 est par exemple illustrée sur la figure 9.

Tel que précédemment décrit, au moins l'une des pattes 231 du toron 230, avantageusement les deux pattes 231 de ce toron 230 présentent une certaine élasticité qui leur permet de se déformer puis de reprendre leur position initiale. Ainsi, on comprend que lorsque le toron 230 pivote dans l'alésage 240, notamment grâce à l'espace 250 délimité entre le périmètre externe du toron 230 et le périmètre interne de l'alésage 240 qui reçoit ce toron 230, les pattes 231 du toron 230 se rapprochent l'une de l'autre progressivement. De plus, les pattes 231 du toron 230 étant au moins partiellement élastiques, elles tendent, une fois rapprochées l'une de l'autre, à reprendre leur position d'origine, de sorte que le toron 230 est ainsi bloqué dans l'alésage 240. L'élasticité des pattes 231 du toron 230 permet ainsi un verrouillage par frottement de la position ouverte du capot 210, ce verrouillage étant progressif et réversible. On entend par «rapprochement des pattes 231 l'une de l'autre » le fait qu'un distance d mesurée entre un point d'une patte et un point d'une autre patte lorsque le capot 210 est en position fermée PF est supérieure à une distance d' mesurée entre les mêmes points lorsque le capot 210 est dans sa position ouverte PO.

Ainsi, le dispositif de verrouillage 500 selon le deuxième exemple de réalisation de la présente invention comprend le méplat 520 ménagé sur le périmètre interne du/des alésage(s), et au moins l'une des pattes 231 du/des toron(s) 230 reçu(s) dans cet/ces alésage(s).

La présente invention propose ainsi un moyen simple et peu coûteux permettant de verrouiller notamment la position ouverte d'un capot d'un ensemble de connexion d'un système d'essuyage afin de faciliter l'accès à une zone de fixation d'un dispositif de fixation de cet ensemble de connexion sur un arbre moteur d'un véhicule, et ainsi de faciliter la mise en place de moyens de fixation permettant de solidariser le dispositif de fixation sur l'arbre moteur.

## Revendications

1. Ensemble de connexion (200) d'un bras d'entrainement (106) d'un balai d'essuyage à un arbre moteur (107) d'un véhicule, l'ensemble de connexion (200) comprenant au moins un dispositif de fixation (220) configuré pour lier en rotation le bras d'entrainement (106) avec l'arbre moteur (107) et au moins un capot (210) monté pivotant sur le dispositif de fixation (220) par l'intermédiaire d'une liaison pivot (600), le capot (210) étant configuré pour prendre une position fermée (PF) dans laquelle il interdit un accès à une zone de fixation (300) entre le dispositif de fixation (220) et l'arbre moteur (107) ou une position ouverte (PO) dans laquelle il autorise l'accès à la zone de fixation (300) entre le dispositif de fixation (220) et l'arbre moteur (107), cette liaison pivot (600) comprenant au moins un alésage (240) et au moins un toron (230) reçu dans l'alésage (240), l'ensemble de connexion (200) comprenant au moins un dispositif de verrouillage (500) de la position ouverte (PO) du capot (210), ce dispositif de verrouillage (500) étant agencé d'une part sur le périmètre interne de l'alésage (240) et d'autre part sur le périmètre externe du toron (230), **caractérisé en ce que** le toron (230) comprend au moins deux pattes (231) déformables reliées entre elles par un pont de matière (232), le toron (230) présentant ainsi une forme en C vu depuis l'alésage (240) qui reçoit ce toron (230).

2. Ensemble de connexion (200) selon la revendication 1, dans lequel l'au moins un toron (230) est ménagé sur le capot (210) et dans lequel l'au moins un alésage (240) est ménagé dans le dispositif de fixation (220).

3. Ensemble de connexion (200) selon l'une quelconque des revendications précédentes, dans lequel une plaque (234) est ménagée sur au moins une partie du périmètre externe du toron (230), une zone (237) du périmètre externe du toron (230) dépourvue de cette plaque (234) délimitant au moins partiellement un espace (250) ménagé entre le périmètre externe du toron (230) et le périmètre interne de l'alésage (240).

4. Ensemble de connexion (200) selon l'une quelconque des revendications précédentes, dans lequel le dispositif de verrouillage (500) comprend au moins une première butée (510) ménagée sur le périmètre interne de l'alésage (240) et au moins une deuxième butée (511) ménagée sur le périmètre externe du toron (230).

5. Ensemble de connexion (200) selon la revendication précédente, dans lequel la deuxième butée (511) est ménagée à une extrémité (236) d'au moins l'une des pattes (231) du toron (230).

6. Ensemble de connexion (200) selon l'une quelconque des revendications 4 ou 5, dans lequel la première butée (510) est formée par un premier bossage et dans lequel la deuxième butée (511) est formée par un deuxième bossage.

7. Ensemble de connexion (200) selon l'une quelconque des revendications 4 à 6, dans lequel l'alésage (240) présente une forme sensiblement cylindrique et dans lequel le premier bossage s'étend parallèlement à un axe de révolution (R1, R2) de l'alésage (240), depuis un bord qui délimite une ouverture (243) de l'alésage (240) par laquelle le toron (230) est inséré dans l'alésage (240).

8. Ensemble de connexion (200) selon l'une quelconque des revendications 4 à 7, dans lequel le toron (230) émerge d'un socle (235) duquel il s'étend majoritairement selon un axe d'extension principal (Y) et dans lequel le deuxième bossage s'étend depuis le socle (235), parallèlement à l'axe d'extension principal (Y).

9. Ensemble de connexion (200) selon l'une quelconque des revendications 1 ou 2, dans lequel le dispositif de verrouillage (500) comprend au moins un méplat (520) ménagé sur le périmètre interne de l'alésage (240), et au moins une patte (231) du toron (230), le méplat (520) étant configuré pour venir en appui contre cette au moins une patte (231).

10. Ensemble de connexion (200) selon la revendication précédente, dans lequel l'appui du méplat (520) sur au moins l'une des pattes (231) du toron (230) génère un rapprochement des deux pattes (231) du toron (230).

11. Ensemble de connexion (200) selon l'une quelconque des revendications 9 ou 10, dans lequel lorsque le capot (210) est dans la position fermée (PF), au moins une droite (Z) coupant le méplat (520) passe entre les pattes (231) du toron (230).

12. Système d'essuyage (100) comprenant au moins un balai d'essuyage (101) destiné à venir au contact d'une surface vitrée (1) d'un véhicule automobile, au moins un bras d'entrainement (106) configuré pour entrainer en rotation le balai d'essuyage (101), **caractérisé en ce que** le bras d'entrainement (106) est relié à un arbre moteur (107) du véhicule par un ensemble de connexion (200) selon l'une quelconque des revendications précédentes.

## Patentansprüche

1. Einheit zum Verbinden (200) eines Antriebsarms (106) eines Scheibenwischers mit einer Motorwelle (107) eines Fahrzeugs, wobei die Verbindungseinheit (200) mindestens eine Befestigungsvorrichtung (220), die dazu konfiguriert ist, den Antriebsarm (106) drehfest mit der Motorwelle (107) zu verbinden, und mindestens eine Abdeckung (210), die mittels einer Schwenkverbindung (600) schwenkbar an der Befestigungsvorrichtung (220) montiert ist, beinhaltet, wobei die Abdeckung (210) dazu konfiguriert ist, eine geschlossene Stellung (PF), in welcher sie einen Zugang zu einem Befestigungsbereich (300) zwischen der Befestigungsvorrichtung (220) und der Motorwelle (107) verhindert, oder eine offene Stellung (PO), in der sie den Zugang zu dem Befestigungsbereich (300) zwischen der Befestigungsvorrichtung (220) und der Motorwelle (107) ermöglicht, einzunehmen, wobei diese Schwenkverbindung (600) mindestens eine Bohrung (240) und mindestens einen Strang (230), der in der Bohrung (240) aufgenommen ist, beinhaltet, wobei die Verbindungseinheit (200) mindestens eine Vorrichtung zur Verriegelung (500) der offenen Stellung (PO) der Abdeckung (210) beinhaltet, wobei diese Verriegelungsvorrichtung (500) einerseits an dem Innenumfang der Bohrung (240) und andererseits an dem Außenumfang des Strangs (230) angeordnet ist, **dadurch gekennzeichnet, dass** der Strang (230) mindestens zwei verformbare Laschen (231) beinhaltet, die durch eine Materialbrücke (232) miteinander verbunden sind, sodass der Strang (230) hierdurch, von der Bohrung (240), die diesen Strang (230) aufnimmt, aus gesehen, eine C-Form aufweist.

2. Verbindungseinheit (200) nach Anspruch 1, wobei der mindestens eine Strang (230) an der Abdeckung (210) eingerichtet ist und wobei die mindestens eine Bohrung (240) in der Befestigungsvorrichtung (220) eingerichtet ist.

3. Verbindungseinheit (200) nach einem der vorhergehenden Ansprüche, wobei auf mindestens einem Abschnitt des Außenumfangs des Strangs (230) eine Platte (234) eingerichtet ist, wobei ein Bereich (237) des Außenumfangs des Strangs (230), an dem diese Platte (234) nicht vorhanden ist, mindestens teilweise einen Raum (250) begrenzt, der zwischen dem Außenumfang des Strangs (230) und dem Innenumfang der Bohrung (240) eingerichtet ist.

4. Verbindungseinheit (200) nach einem der vorhergehenden Ansprüche, wobei die Verriegelungsvorrichtung (500) mindestens einen ersten Anschlag (510), der an dem Innenumfang der Bohrung (240) eingerichtet ist, und mindestens einen zweiten Anschlag (511), der an dem Außenumfang des Strangs (230) eingerichtet ist, beinhaltet.

5. Verbindungseinheit (200) nach dem vorhergehenden Anspruch, wobei der zweite Anschlag (511) an einem Ende (236) mindestens einer der Laschen (231) des Strangs (230) eingerichtet ist.

6. Verbindungseinheit (200) nach einem der Ansprüche 4 oder 5, wobei der erste Anschlag (510) durch eine erste Erhebung gebildet ist und wobei der zweite Anschlag (511) durch eine zweite Erhebung gebildet ist.

7. Verbindungseinheit (200) nach einem der Ansprüche 4 bis 6, wobei die Bohrung (240) eine im Wesentlichen zylindrische Form aufweist und wobei sich die erste Erhebung parallel zu einer Drehachse (R1, R2) der Bohrung (240) erstreckt, ab einem Rand, der eine Öffnung (243) der Bohrung (240) begrenzt, durch die der Strang (230) in die Bohrung (240) eingeführt wird.

8. Verbindungseinheit (200) nach einem der Ansprüche 4 bis 7, wobei der Strang (230) aus einem Sockel (235) hervorgeht, von dem er sich überwiegend gemäß einer Haupterstreckungsachse (Y) erstreckt, und wobei sich die zweite Erhebung von dem Sockel (235) parallel zu der Haupterstreckungsachse (Y) erstreckt.

9. Verbindungseinheit (200) nach einem der Ansprüche 1 oder 2, wobei die Verriegelungsvorrichtung (500) mindestens eine Abflachung (520), die an dem Innenumfang der Bohrung (240) eingerichtet ist, und mindestens eine Lasche (231) des Strangs (230) beinhaltet, wobei die Abflachung (520) dazu konfiguriert ist, gegen diese mindestens eine Lasche (231) zur Anlage zu kommen.

10. Verbindungseinheit (200) nach dem vorhergehenden Anspruch, wobei das Abstützen der Abflachung (520) an mindestens einer der Laschen (231) des Strangs (230) eine Annäherung der zwei Laschen (231) des Strangs (230) erzeugt.

11. Verbindungseinheit (200) nach einem der Ansprüche 9 oder 10, wobei, wenn sich die Abdeckung (210) in der geschlossenen Stellung (PF) befindet, mindestens eine Gerade (Z), die die Abflachung (520) schneidet, zwischen den Laschen (231) des Strangs (230) verläuft.

12. Wischsystem (100), das mindestens einen Scheibenwischer (101), der dazu bestimmt ist, mit einer Glasscheibe (1) eines Kraftfahrzeugs in Kontakt zu kommen, mindestens einen Antriebsarm (106), der dazu konfiguriert ist, den Scheibenwischer (101) in Drehung zu versetzen, beinhaltet, **dadurch gekennzeichnet, dass** der Antriebsarm (106) durch eine Verbindungseinheit (200) nach einem der vorhergehenden Ansprüche mit einer Motorwelle (107) des Fahrzeugs verbunden ist.

## Claims

1. Assembly (200) for connecting a windscreen wiper drive arm (106) to a vehicle drive shaft (107), the connection assembly (200) comprising at least one fixing device (220) configured to rotatably connect the drive arm (106) to the drive shaft (107) and at least one cover (210) mounted pivotably on the fixing device (220) by means of a pivoting connection (600), the cover (210) being configured to adopt a closed position (PF) in which it prohibits access to a fixing zone (300) between the fixing device (220) and the drive shaft (107) or an open position (PO) in which it permits access to the fixing zone (300) between the fixing device (220) and the drive shaft (107), this pivoting connection (600) comprising at least one bore (240) and at least one trunnion (230) received in the bore (240), the connection assembly (200) comprising at least one device (500) for locking the open position (PO) of the cover (210), this locking device (500) being arranged on the inner perimeter of the bore (240) and on the outer perimeter of the trunnion (230), **characterized in that** the trunnion (230) comprises at least two deformable prongs (231) connected to each other by a bridge of material (232), the trunnion (230) being C-shaped as seen from the bore (240) receiving the trunnion (230).

2. Connection assembly (200) according to claim 1, in which the at least one trunnion (230) is made on the cover (210) and in which the at least one bore (240) is made in the fixing device (220).

3. Connection assembly (200) according to any one of the previous claims, in which a block (234) is made on at least part of the outer perimeter of the trunnion (230), a zone (237) of the outer perimeter of the trunnion (230) not provided with this block (234) at least partially defining a space (250) made between the outer perimeter of the trunnion (230) and the inner perimeter of the bore (240).

4. Connection assembly (200) according to any one of the previous claims, in which the locking device (500) comprises at least a first stop (510) made on the inner perimeter of the bore (240) and at least a second stop (511) made on the outer perimeter of the trunnion (230).

5. Connection assembly (200) according to the previous claim, in which the second stop (511) is made at one end (236) of at least one of the prongs (231) of the trunnion (230).

6. Connection assembly (200) according to either one of Claims 4 and 5, in which the first stop (510) is formed by a first boss and in which the second stop (511) is formed by a second boss.

7. Connection assembly (200) according to any one of Claims 4 to 6, in which the bore (240) has a substantially cylindrical shape and in which the first boss extends parallel to an axis of revolution (R1, R2) of the bore (240), from an edge that defines an opening (243) of the bore (240) through which the trunnion (230) is inserted into the bore (240).

8. Connection assembly (200) according to any one of Claims 4 to 7, in which the trunnion (230) emerges from a base (235) from which it extends mostly along a main axis of extension (Y) and in which the second boss extends from the base (235), parallel to the main axis of extension (Y).

9. Connection assembly (200) according to any one of Claims 1 or 2, in which the locking device (500) comprises at least one flat section (520) made on the inner perimeter of the bore (240), and at least one prong (231) of the trunnion (230), the flat section (520) being configured to press against this at least one prong (231).

10. Connection assembly (200) according to the previous claim, in which the pressure of the flat section (520) on at least one of the prongs (231) of the trunnion (230) brings the two prongs (231) of the trunnion (230) towards each other.

11. Connection assembly (200) according to either one of Claims 9 or 10, in which when the cover (210) is in the closed position (PF), at least one straight line (Z) intersecting the flat section (520) passes between the prongs (231) of the trunnion (230).

12. Wiper system (100) comprising at least one windscreen wiper (101) intended for coming into contact with a glazed surface (1) of a motor vehicle, at least one drive arm (106) configured to rotate the windscreen wiper (101), **characterized in that** the drive arm (106) is connected to a drive shaft (107) of the vehicle by a connection assembly (200) according to any one of the previous claims.
